# EUROPEAN PATENT APPLICATION

(11) **EP 1 168 677 A2**
(43) Date of publication of application: **02.01.2002**
(21) Application number: 01305600.7
(22) Date of filing: 27.06.2001
(51) Int. Cl.: H04B 10/10

(54) **Optical data bus communication in an artificial satellite**

(30) Priority: 27.06.2000 JP 2000192996
(71) Applicant: NEC CORPORATION, Tokyo (JP)
(72) Inventor: Mizushima, Yasuhiko, c/o NEC Corporation, Tokyo (JP); Amano, Yukio, c/o NEC Corporation, Tokyo (JP)
(74) Representative: Moir, Michael Christopher

(57) **Abstract**

An optical data bus communication system of an artificial satellite includes an optical transmitter, a reflection film provided over the entire inner surface of the satellite, and an optical receiver that receives optical signals that are transmitted from the optical transmitter both directly and after reflection and diffusing by the reflection film and reproduces the optical signals from the received signals.

## Description

### Background of the Invention:

### Field of the Invention:

The present invention relates to a technique for communication between a plurality of devices (satellite components) loaded in an artificial satellite, and more particularly to an optical communication technique.

### Description of the Related Art:

The limited amount of space inside an artificial satellite mandates efficient design to enable loading of as many devices as possible in a limited space. Electrical interfaces have generally been adopted for the interfaces between devices that are loaded inside an artificial satellite, but the limitation on loading area imposed by laying of cables and connectors has tended to decrease loading efficiency.

The adoption of optical communication for interfaces between loaded devices has been proposed for solving the problem regarding the limitation on loading area imposed by the laying of cables and connectors. For example, Japanese Patent Laid-open No. 261934/89 discloses the use of laser light propagated through space to realize the interfaces of signal lines between the satellite components.

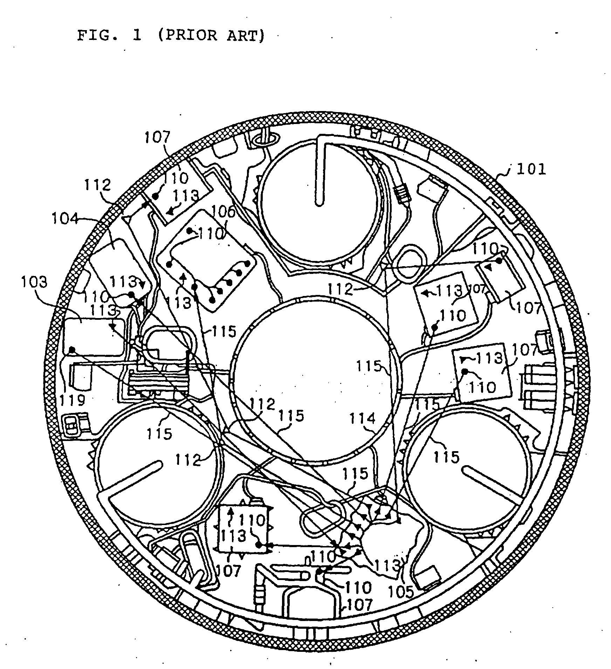

Fig. 1 is an optical path chart giving a schematic view of the paths of command signals in an artificial satellite described in the above-mentioned publication. Transmission/reception antenna 101 is provided on the outer circumference of the artificial satellite case, while inside the case are provided: diplexer 102 for distinguishing transmitted signals and received signals; receiver 103 for receiving uplink signals and demodulating command signals; transmitter 104 for modulating telemetry signals and transmitting the result as downlink signals to the ground station; command unit 105 for decoding and processing command signals from the ground station; loaded components 107, and telemetry unit 106 for converting data that are sent from these constituent parts to telecommand signals. Optical sensor 110 and semiconductor laser element 113 are provided in pairs in each of constituent parts 101 to 107.

In the example shown in Fig. 1, a laser beam emitted from semiconductor laser element 113 of receiver 103 is irradiated directly to optical sensor 110 provided in command unit 105, and laser beams that are emitted from each semiconductor laser element 113 of command unit 105 are irradiated either directly or by way of reflector 112 to optical sensors 110 that are provided in each of diplexer 102, receiver 103, transmitter 104, and loaded components 107. The transmission and reception of command signals is made possible in each of the constituent parts by modulating the laser beam that is emitted from semiconductor laser elements 113 and demodulating the modulated light that is received by optical sensors 110.

As described in the foregoing explanation, using electrical interfaces to constitute the interfaces between devices that are loaded on an artificial satellite has resulted in the problem of reduced loading efficiency due to limitations on the packaging area for laying of cables and connectors. In addition, because loaded components are densely packed, the use of electrical interfaces has adversely affected the electromagnetic environment inside the artificial satellite. Furthermore, when the artificial satellite transmits and receives radiowaves to and from a ground station, every effort must be made to suppress the emission of electromagnetic waves from the loaded devices that interfere with radiowave transmission and reception.

Although Japanese Patent Laid-open No. 261934/89 described hereinabove can solve the above-described problem of the electrical interfaces, the one-to-one communication between the loaded devices results in the following problems:

As can be understood from the example shown in Fig. 1, semiconductor laser elements 113 must be provided for every device in command unit 105 that transmits command signals to a plurality of devices, and the construction of the device therefore becomes both complex and expensive. Similarly, optical sensors 110 must be provided for every device in telemetry unit 106 that receives signals from a plurality of devices, and again, the construction of the device therefore becomes both complex and expensive. A laser beam that is emitted from semiconductor laser element 113 arrives at optical sensor 110 by traveling over only one path, and if an obstruction should occur in this path, the laser beam is blocked by the obstruction. Due consideration must therefore be given when arranging these semiconductor laser elements 113 and optical sensors 110 in order that loaded devices not be located on these paths, and these restrictions reduce the loading efficiency.

### Summary of the Invention:

It is an object of the preferred embodiment of the present invention to provide an optical data bus communication system and optical data bus communication method that solve the above-described problems and that enable simpler device construction, lower cost, and moreover, higher loading efficiency.

The optical data bus communication system of the present invention is an optical data bus communication system of an artificial satellite and includes: an optical transmitter, a reflection means that is provided on the entire inner surface of the case of, or at prescribed locations inside, the case of the artificial satellite; and, an optical receiver that receives optical signals that are transmitted from the optical transmitter both directly and after reflection and diffusing by the reflection means, and reproduces the optical signals from these received signals.

In the case described hereinabove, the present invention may be constituted to include a plurality of first devices that are equipped with the optical transmitter and a second device that is equipped with the optical receiver wherein optical signals that are transmitted from each of the optical transmitters that are equipped in the plurality of first devices are received by the optical receiver that is equipped in the second device either directly or by way of the reflection means.

In addition, the present invention may be constituted to include a first device that is equipped with the optical transmitters and a plurality of second devices that are equipped with the optical receivers, wherein optical signals that are sent from the optical transmitter that is equipped in the first device are received by each of the optical receivers of the plurality of second devices either directly or by way of the reflection means.

The present invention may also be constituted to include a plurality of first devices that are equipped with the optical transmitters and a plurality of second devices that are equipped with the optical receivers, wherein the optical transmitters that are equipped in the plurality of first devices each send optical signals of a differing wavelength, the optical receivers that are equipped in the plurality of second devices each receive optical signals of a different wavelength, and the optical signals that are transmitted from each of the optical transmitters that are equipped in the plurality of first devices are received by the optical receivers that are equipped in the plurality of second devices either directly or by way of the reflection means.

The above-described optical transmitters may be provided with a wide-angle LED as a light source for transmission, and the optical receivers may be provided with a wide-angle photodiode for receiving light emitted from the LED.

The optical data bus communication method of the present invention is an optical data bus communication method that is used in an artificial satellite in which an optical transmitter and an optical receiver are loaded; comprising the steps of :
transmitting optical signals from said optical transmitter to said optical receiver;
reflecting and diffusing optical signals that are transmitted from said optical transmitter with a reflection means that is provided on the entire inner surface of, or at prescribed locations inside, the case of said artificial satellite; and
receiving optical signals that are transmitted from said optical transmitter both directly and after said reflecting and diffusing to reproduce said optical signals from these received signals in said optical receiver.

In the present invention as described hereinabove, the optical signals that are transmitted from the optical transmitter are received at the optical receiver either directly or over a plurality of paths (multipaths) by way of the reflection means, whereby communication is not impeded even if a portion of the light paths are blocked by other loaded devices. As a result, communication is not interrupted even when another loaded device is arranged between loaded devices that are provided with optical transmitters and optical receivers and thus becomes an obstruction.

According to the present invention, moreover, an optical data bus construction is formed in which a plurality of optical receivers receive optical signals that are transmitted from one optical transmitter, thereby eliminating the need for a plurality of light-emitting elements for transmission on the transmitting side, as was required in the prior art.

Similarly, the present invention provides an optical data bus configuration in which one optical receiver receives optical signals that are transmitted from a plurality of optical transmitters, thereby eliminating the need for a plurality of light-receiving elements on the receiving side, as was required in the prior art.

According to the present invention, the use of a wide-angle LED as the transmission light source increases the breadth of the light (optical signals) that is transmitted from the optical transmitter, and the use of wide-angle photodiodes as the light-receiving elements broadens the range from which light (optical signals) is received by the optical receivers. As a result, the failure to communicate due to obstruction of optical signals by other devices can be virtually eliminated.

Finally, according to the present invention, the elimination of the need for communication cables for communication between loaded devices removes the limitation on the packaging area caused by the laying of communication cables and connectors as in the prior art, and in addition, eliminates the need to consider the problem of electromagnetic waves emitted from communication cables.

### Brief Description of the Drawings:

Preferred features of the present invention will now be described, by way of example only, with reference to accompanying drawings, in which:-
Fig. 1 is a schematic optical path diagram of the paths of command signals in an artificial satellite described in Japanese Patent Laid-open No. 261934/89.
Fig. 2 is a schematic diagram of the optical data bus communication system of an embodiment of the present invention.
Fig. 3 is a function block diagram of the optical transmitter and optical receiver shown in Fig. 2.
Fig. 4 is a block diagram showing an example of the configuration of the AGC shown in Fig. 3.
Fig. 5a is a schematic representation illustrating the input of the AGC shown in Fig. 3.
Fig. 5b is a schematic representation illustrating the output of the average level calculation circuit shown in Fig. 4.
Fig. 5c is a schematic representation illustrating the output of the AGC shown in Fig. 3.
Fig. 6 is a block diagram showing an example of the construction of the digital signal input unit shown in Fig. 3.
Fig. 7 is a timing chart for explaining the operation of each constituent part of the digital signal input unit shown in Fig. 6.

### Detailed Description of the Preferred Embodiments:

The embodiments of the present invention are next explained with reference to the accompanying drawings.

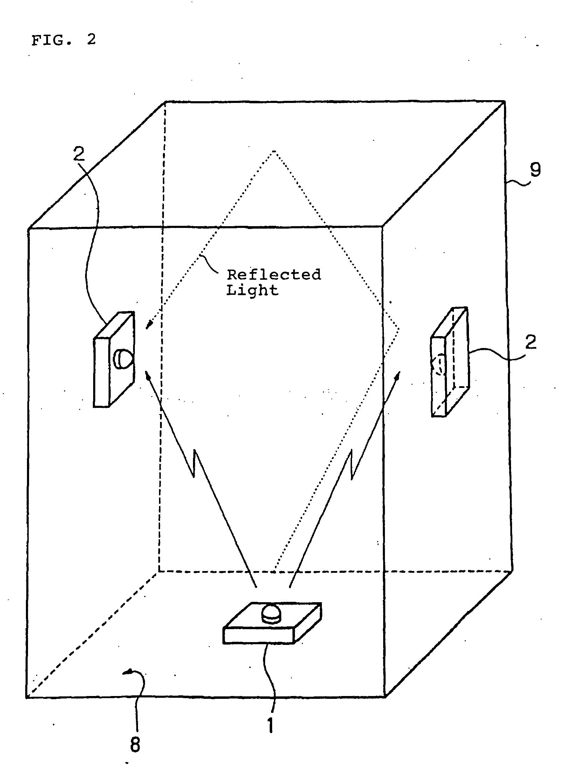

Fig. 2 is a schematic view of the optical data bus communication system of an embodiment of the present invention. This optical data bus communication system is a configuration in which one optical transmitter 1 and two optical receivers 2 are arranged inside case 9 of an artificial satellite. Optical transmitter 1 and optical receivers 2 are equipped in devices that are loaded in an artificial satellite, and communication between loaded devices is realized by way of the transmitter and receivers. In the interest of simplifying the explanation, loaded devices are omitted in Fig. 2.

Reflection film 8 composed of a prescribed reflecting material is coated over the entire inner surface of case 9. Optical transmitter 1 is equipped with a light-emitting element as a transmission light source. A wide-angle LED having a large spread of emitted light (angle of divergence) is preferably used as the light-emitting element. Optical receiver 2 is equipped with a light-receiving element. A wide-angle photodiode capable of irradiating light at a wide-angle onto light-receiving surfaces is preferably used as this light-receiving element. In this case, the range of light that can be irradiated onto the light-receiving surface is determined by various geometric optical conditions such as the relative positions of the aperture and condensing lens.

In this optical data bus communication system, optical signals transmitted from optical transmitter 1 arrive at optical receiver 2 either directly or after being reflected by reflection film 8 of the inner surface of case 9. The optical signals that are transmitted from optical transmitter 1 are light beams having a certain degree of divergence. Therefore, the arrangement of a device in the direction of the advance light that obstructs the light will block only a portion of the light, and the remaining portion of light will be received by optical receiver 2. In other words, optical signals that are transmitted from optical transmitter 1 are not completely blocked by devices that exist in the path of the light propagation.

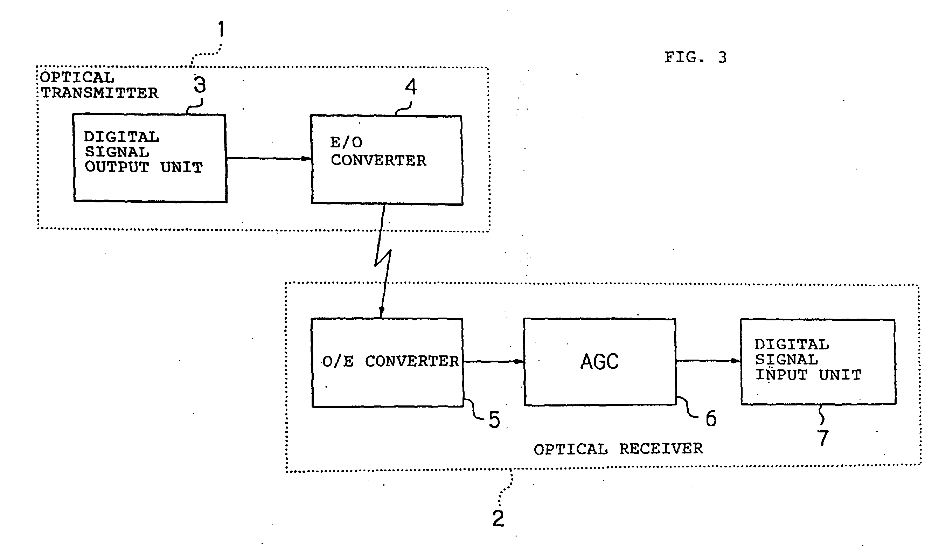

Fig. 3 presents a function block diagram of optical transmitter 1 and optical receiver 2. Optical transmitter 1 is made up by digital signal output unit 3 and E/O converter 4, and optical receiver 2 is made up by O/E converter 5, AGC (Automatic Gain Control) 6 and digital signal input unit 7.

Digital signal output unit 3 converts to serial signals the digital signals that are received from the processor of the loaded device in which the optical transmitter 1 is provided. E/O converter 4 converts the serial signals that are converted in digital signal output unit 3 to optical signals. The optical signals that are converted by E/O converter 4 are received by optical receiver 2.

O/E converter 5 converts the optical signals (optical signals that were converted by E/O converter 4) that are received by optical receiver 2 to electrical signals. The optical signals (received optical signals) that are received by optical receiver 2 include light that is directly incident from optical transmitter 1 (direct light) and light that is incident after being reflected by the inner surface of case 9 (reflected light). Some variation occurs in the amount of light in the received optical signal due to this direct light and reflected light, and the level of the electrical signals that are converted by O/E converter 5 is therefore not uniform.

AGC 6 electrically increases and decreases the level of electrical signals that are converted by O/E converter 5 to convert the signals to electrical signals of a required level. Digital signal input unit 7 reproduces the electrical signals ( serial signals) that are converted by AGC 6 as digital signals . Because due consideration must be given to delay caused by the difference in optical paths of the direct light and reflected light in the received optical signals, pulse width shaping is performed at digital signal input unit 7 during this digital signal reproduction.

In optical transmitter 1 and optical receiver 2 configured as described above, optical communication is realized as described below.

First, digital signals that are to be transmitted from the loaded device in which optical transmitter 1 is provided are applied to optical transmitter 1. In optical transmitter 1, these received digital signals are converted to serial signals by digital signal output unit 3, and the serial signals are then converted to optical signals by E/O converter 4. The optical signals that are converted in E/O converter 4 are propagated through the space inside case 9 of the artificial satellite and are received by optical receiver 2 either directly or after being reflected by the inner surface of case 9.

In optical receiver 2 that has received the optical signals from optical transmitter 1, O/E converter 5 first converts the received optical signals to electrical signals, and AGC 6 then converts the converted electrical signals to electrical signals of the required level. Digital signal input unit 7 then reproduces the original transmission signals from the electrical signals of required level that are converted by AGC 6.

Explanation is next given regarding details of the actual configuration and operation of AGC 6 and digital signal input unit 7.

### (1) Regarding AGC 6

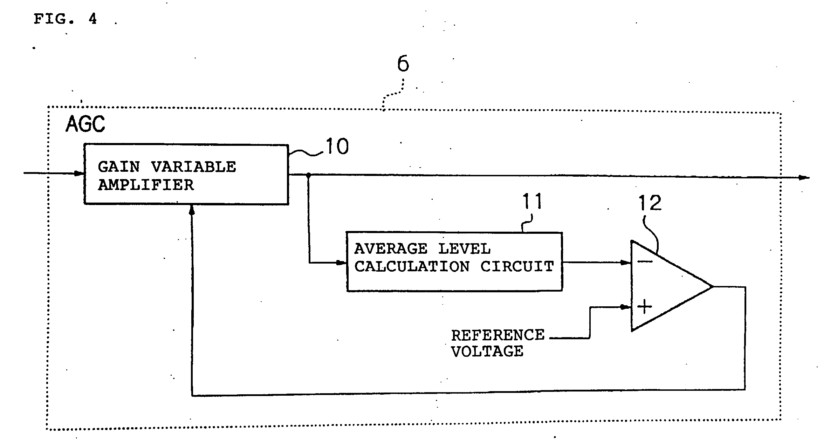

As described hereinabove, the level of electrical signals that are converted by O/E converter 5 rises and falls according to the distance (optical path length) from the light-emitting element of optical transmitter 1 to the light-receiving element of optical receiver 2 and according to the number of instances of reflection by the inner surface of case 9 (loss due to reflection). In AGC 6, the average level of the electrical signals that are converted by O/E converter 5 is calculated and control is effected such that this average level equals a predetermined standard level. Fig. 4, shows an example of the configuration of AGC 6 that is capable of realizing this type of control.

This AGC 6 shown in Fig. 4 includes gain variable amplifier 10 that receives the electrical signals that are converted by O/E converter 5, average level calculation circuit 11 that calculates the average level of the output of gain variable amplifier 10, and comparator 12 that takes the output of average level calculation circuit 11 as one input, a reference voltage as the other input, and outputs the difference between the two inputs. The output of comparator 12 is applied as feedback input to gain variable amplifier 10, and gain variable amplifier 10 raises and lowers the level of the electrical signals that are converted by O/E converter 5 based on this feedback input.

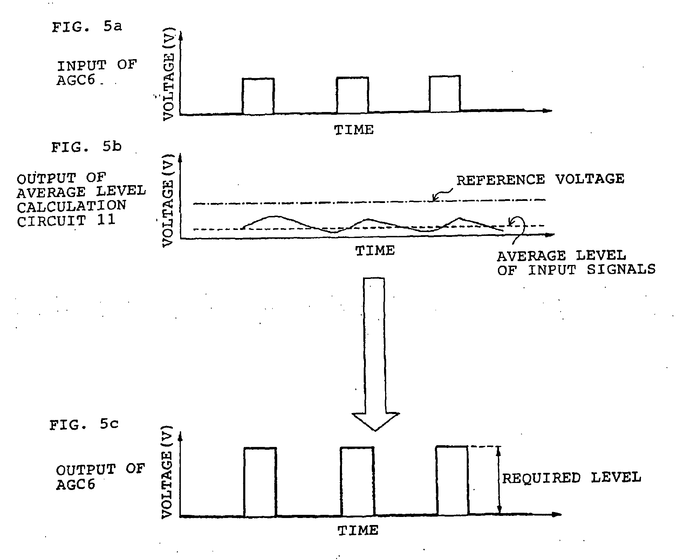

In this AGC 6, the level of electrical signals that are received from O/E converter 5 is raised and lowered by gain variable amplifier 10 such that the output of comparator 12 approaches "0." Figs. 5a to 5c show a schematic representation of the relation between the input of AGC 6, the output of average level calculation circuit 11, and the output of AGC 6. In this example, the level of the input signals of AGC 6 is low (refer to Fig. 5a), and the average level of the input signals that is calculated by average level calculation circuit 11 is lower than the reference voltage (refer to Fig. 5b). Since the input voltage of AGC 6 is lower than the reference voltage in this state, the gain of gain variable amplifier 10 is moved in the direction of increase. In contrast to this case, the gain of gain variable amplifier 10 moves in the direction of decrease when the input voltage exceeds the reference voltage.

After the passage of a particular time interval, the above-described gain control establishes and maintains a state in which the average value of the input signal level matches the reference voltage, and signals of the required voltage level are outputted from AGC 6 (refer to Fig. 5c). The level of the electrical signals that are outputted from AGC 6 are thus stably maintained at the required level.

The operation of this AGC 6 enables conversion of the optical signals that are received from optical transmitter 1 to electrical signals of the required level regardless of the location of arrangement of optical receiver 2 inside case 9 of the artificial satellite, and stabilized reception can therefore be guaranteed.

### (2) Regarding Digital Signal Input Unit 7

As described hereinabove, the optical signals that are transmitted from optical transmitter 1 arrive at optical receiver 2 by way of various paths, and the waveform of the optical signals that are received by optical receiver 2 is consequently a sine wave rather than a well-defined rectangular wave. If rectangular-wave signals are reproduced based on these received signals of sine-wave form using a simple threshold level as reference, the pulse width of the reproduced signals will diverge from the pulse width of the signals at the time of transmission. Since the period of the signals at the time of transmission is known beforehand, the pulse width of signals at the time of reproduction is estimated based on this period, and waveform shaping is carried out at digital signal input unit 7 such that the pulse width of the reproduced signals matches the pulse width of the signals at the time of transmission.

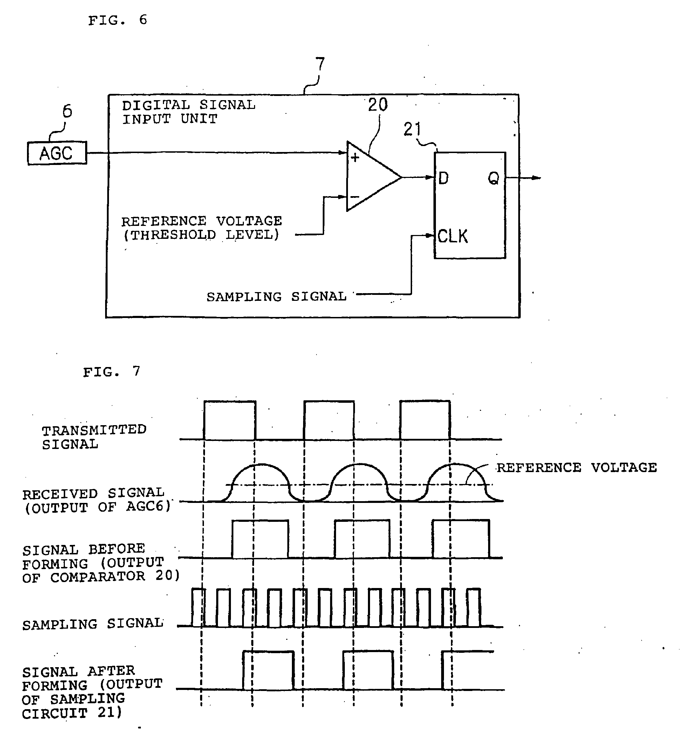

Fig. 6 shows an example of the configuration of digital signal input unit 7, and Fig. 7 shows a timing chart for explaining the operation of this unit. Digital signal input unit 7 is provided with a pulse width shaping circuit for converting the output of AGC 6 to digital signals of a prescribed pulse width. This pulse width shaping circuit is made up by comparator 20 that takes the output of AGC 6 as one input, a reference voltage (threshold level) as the other input, and converts the output of AGC 6 to digital signals based on the positive or negative value of the difference between these inputs; and sampling circuit 21 that receives the digital signals that are output from comparator 20 at input terminal D and sampling signals of a prescribed frequency at terminal CLK.

As shown in Fig. 7, although a rectangular wave signal is transmitted from optical transmitter 1, this transmitted signal is received as a sine wave signal at optical receiver 2. The received signal shown in Fig. 7 is the output of AGC 6.

Although the output of AGC 6 was shown as a rectangular wave in the interest of convenience in the example shown in the previously described Figs. 5a to 5c, the output of AGC 6 actually forms a sine wave rather than a well-defined rectangular wave due to multipaths.

In the pulse width shaping circuit configured as described above, comparator 20 converts the output of AGC 6 (a sine wave) to digital signals based on a reference voltage, and sampling circuit 21 carries out sampling using a sampling signal of a prescribed frequency to convert the digital signals that are converted by this comparator 20 to digital signals of a prescribed pulse width. The pulse width of the signals that have undergone waveform shaping in this way matches the pulse width of the transmitted signals.

In the above-described optical data bus communication system of the present embodiment, the loaded devices that are equipped with optical transmitters 1 and the loaded devices that are equipped with optical receivers 2 are normally provided inside the case of the artificial satellite, but one of these devices may also be provided outside the case. For example, in one possible construction, a loaded device that is equipped with optical transmitter 1 is provided outside the case and a loaded device that is equipped with optical receiver 2 is provided inside the case, and in such a case, a window is provided at a prescribed portion of the case and optical signals are transmitted and received between optical transmitter 1 and optical receiver 2 by way of this window.

Although a one-to-two communication configuration composed of one optical transmitter and two optical receivers was described in this embodiment, other communication configurations may be adopted. For example, communication configurations such as single point-to-multipoint, multipoint -to-single point, and multipoint-to-multipoint configurations may also be adopted. A construction for realizing the multipoint-to-multipoint communication configuration is next described as one example.

A multipoint-to-multipoint communication configuration can be realized by varying the wavelength of the optical signals that are transmitted and received between the optical transmitters and optical receivers. Specifically, a multipoint-to-multipoint communication configuration can be realized by providing a plurality of optical transmitters that each transmit optical signals of differing wavelength and a plurality of optical receivers that each receive optical signals of differing wavelength wherein the optical signals transmitted from each optical transmitter are received by a respective optical receiver. Furthermore, if communication is carried out between loaded devices that are each provided with both an optical transmitter and optical receiver, a bidirectional full duplex multipoint-to-multipoint communication configuration can be realized.

As described in the foregoing explanation, according to the present invention, communication is not impeded despite the disposition of another obstructing loaded device between loaded devices that are provided with optical transmitters and optical receivers, whereby a greater degree of freedom in arrangement of loaded devices and an improvement in the loading efficiency of an artificial satellite can be obtained.

In addition, the present invention eliminates the need for a transmitter to be provided with a transmission light source for each receiver, and further, eliminates the need for a receiver to be provided with a light-receiving element for each transmitter. The present invention can therefore provide an artificial satellite with a simpler construction and at a lower cost than the prior art.

Finally, by employing wide-angle LEDs and wide-angle photodiodes, the present invention virtually eliminates the inability to communicate due to obstruction of optical signals by other devices, and the present invention can therefore provide an artificial satellite having superior stability and reliability.

While preferred embodiments of the present invention have been described using specific terms, such description is for illustrative purposes only, and it is to be understood that changes and variations may be made without departing from the scope of the following claims.

Each feature disclosed in this specification (which term includes the claims) and/or shown in the drawings may be incorporated in the invention independently of other disclosed and/or illustrated features.

The text of the abstract filed herewith is repeated here as part of the specification.

An optical data bus communication system of an artificial satellite includes an optical transmitter, a reflection film provided over the entire inner surface of the satellite, and an optical receiver that receives optical signals that are transmitted from the optical transmitter both directly and after reflection and diffusing by the reflection film and reproduces the optical signals from the received signals.

## Claims

1. An optical data bus communication system of an artificial satellite, comprising:
an optical transmitter;
a reflection means that is provided on the entire inner surface of, or at prescribed locations inside, the case of said artificial satellite; and,
an optical receiver that receives optical signals that are transmitted from said optical transmitter both directly and after reflection by said reflection means, and reproduces said optical signals from these received signals.

2. An optical data bus communication system according to claim 1, comprising a plurality of first devices that are equipped with said optical transmitters and a second device that is equipped with said optical receiver;
wherein optical signals that are transmitted from each of said optical transmitters that are equipped in said plurality of first devices are received by said optical receiver that is equipped in said second device either directly or by way of said reflection means.

3. An optical data bus communication system according to claim 1, comprising a first device that is equipped with said optical transmitter and a plurality of second devices that are equipped with said optical receivers;
wherein optical signals that are transmitted from said optical transmitter that is equipped in said first device are received by each of said optical receivers of said plurality of second devices either directly or by way of said reflection means.

4. An optical data bus communication system according to claim 1, comprising a plurality of first devices that are equipped with said optical transmitters and a plurality of second devices that are equipped with said optical receivers;
wherein said optical transmitters that are equipped in said plurality of first devices each transmit optical signals of a differing wavelength, and said optical receivers that are equipped in said plurality of second devices each receive optical signals of a different wavelength; and,
optical signals that are transmitted from each of said optical transmitters that are equipped in said plurality of first devices are received by said optical receivers that are equipped in said plurality of second devices either directly or by way of said reflection means.

5. An optical data bus communication system according to claim 1, wherein said optical transmitter is equipped with a wide-angle LED as a light source for transmission, and said optical receiver is equipped with a wide-angle photodiode for receiving light emitted from said LED.

6. An optical data bus communication system according to claim 1, wherein said reflection means is a polygon reflection mirror.

7. An optical data bus communication system according to claim 1, comprising a window at a prescribed portion of said case, wherein said optical transmitter is provided outside said case and said optical receiver is provided inside said case, and optical signals that are transmitted from said optical transmitter are received by said optical receiver by way of said windows.

8. An optical data bus communication system according to claim 1, wherein said optical receiver comprises:
an optical-to-electrical (O/E) converter for converting received optical signals to electrical signals;
a gain control means for converting electrical signals that are converted by said O/E converter to electrical signals of a required level; and,
a pulse width shaping means for converting electrical signals of a required level that are converted by said gain control means to digital signals of a prescribed pulse width.

9. An optical data bus communication system according to claim 8,wherein said pulse width shaping means comprises:
a comparator that takes output of said gain control means as one input and a reference voltage as another input and, based on the positive or negative of the difference between these inputs, converts electrical signals of a required level that are output from said gain control means to digital signals; and,
a sampling means that performs sampling by a sampling signal of a prescribed frequency to convert digital signals that are converted by said comparator to digital signals of a prescribed pulse width.

10. An optical data bus communication method that is used in an artificial satellite in which an optical transmitter and an optical receiver are loaded, comprising the steps of :
transmitting optical signals from said optical transmitter to said optical receiver;
reflecting and diffusing optical signals that are transmitted from said optical transmitter with a reflection means that is provided on the entire inner surface of, or at prescribed locations inside, the case of said artificial satellite; and,
receiving optical signals that are transmitted from said optical transmitter both directly and after said reflecting and diffusing to reproduce said optical signals from these received signals in said optical receiver.

11. An optical data bus communication method according to claim 10, wherein said step in which optical signals are reproduced includes the steps of:
converting optical signals that are received from said optical transmitter to electrical signals;
further converting said electrical signals to electrical signals of a required level; and,
carrying out sampling at a sampling signal of a prescribed frequency to convert said electrical signals of a required level to digital signals of a prescribed pulse width.

12. An artificial satellite having an optical transmitter and an optical receiver, between which exist a plurality of optical transmission paths within the satellite, at least one of said paths being via a reflector.
